# EUROPEAN PATENT SPECIFICATION

(11) **EP 3 539 851 B1**
(45) Date of publication and mention of the grant of the patent: **07.07.2021**
(21) Application number: 19162760.3
(22) Date of filing: 14.03.2019
(51) Int. Cl.: B62D 15/02

(54) **PARKING CONTROL DEVICE AND VEHICLE CONTROL DEVICE**
EINPARKSTEUERUNGSVORRICHTUNG UND FAHRZEUGSTEUERUNGSVORRICHTUNG
DISPOSITIF DE COMMANDE DE STATIONNEMENT ET DISPOSITIF DE COMMANDE DE VÉHICULE

(30) Priority: 15.03.2018 JP 2018048557
(43) Date of publication of application: 18.09.2019
(73) Proprietor: AISIN SEIKI KABUSHIKI KAISHA, Kariya-shi Aichi-ken, 448-8650 (JP)
(72) Inventor: WATANABE, Hiroyuki, KARIYA-SHI, AICHI-KEN, 448-8650 (JP)
(74) Representative: Cabinet Beau de Loménie

(56) References cited:
- EP-A1- 3 290 301
- DE-A1-102015 201 204
- DE-A1-102015 209 976
- DE-A1-102015 217 389
- US-A1- 2017 212 519

## Description

### TECHNICAL FIELD

Embodiments of this disclosure relate to a parking control device and a vehicle control device.

### BACKGROUND DISCUSSION

In the related art, a parking assistance system has been proposed, which provides, for example, parking target position information, map information around a parking target position, and recommended traveling path information from an information center that manages a parking lot to a vehicle that wishes to park, and guides the vehicle to the parking target position. Then, the vehicle is configured to perform traveling along a recommended traveling path while executing recognition of the current position of the vehicle or the circumstance around the vehicle (e.g., recognition of the presence or absence of an obstacle or recognition of a parking lane marking) using various in-vehicle sensors, for example, an imaging unit or a distance measurement unit. See, for example, JP2017-067466A (Reference 1). See also, DE102015209976A1 (Reference 2), showing the preamble of the independent claim, which discloses an assistance system for driverless driving of a motor vehicle.

As described above, the system in the related art is configured to finally detect the circumstance around the vehicle from the vehicle side and cause the vehicle to reach the parking target position while checking the safety around the vehicle or improving the accuracy of movement. Therefore, when the accuracy (function) of the in-vehicle sensor is degraded, the circumstance around the vehicle may not be sufficiently grasped and the vehicle may not be accurately guided to the parking target position. For example, when the sensor is broken, or when the wiring of the sensor is disconnected, and thus, when a communication failure has occurred, a detection signal may not be acquired normally. In addition, it is impossible to sufficiently grasp the circumstance around the vehicle, for example, when the detection surface of the imaging unit or the distance measurement unit has become dirty by splashes of mud, dust, or the like. As a result, when an obstacle (e.g., another vehicle or a pedestrian) exists around the parking target position or around the own vehicle (vehicle), it may be impossible to sufficiently secure the distance to the obstacle, or the risk of a minor collision may increase. Accordingly, it is worthwhile to provide a parking control device capable of accurately and safely guiding a vehicle to a parking target position even when the accuracy (function) of an in-vehicle sensor is degraded and a vehicle control device that may be applied to the parking control device.

### SUMMARY

A parking control device according to an embodiment of this disclosure includes an acquisition unit configured to acquire operation state information of a sensor existing in a parking lot area, and an information generation unit configured to generate parking guidance information within the parking lot area which is based on the operation state information. According to this configuration, since the parking guidance information is generated from the parking control device side after taking into consideration of the operation state information of the sensor existing in the parking lot area, for example, it is easy to accurately and safely execute the guidance of a vehicle.

The information generation unit of the parking control device according to the embodiment of this disclosure may generate, as the parking guidance information, for example, at least one of a movement target position for guiding a vehicle that has entered the parking lot area to a vacant parking space in the parking lot area and a guidance path for guiding the vehicle to the movement target position. According to this configuration, the movement target position or the guidance path are generated and provided to the vehicle based on the peripheral circumstance that may be detected (confirmed) by, for example, a normal sensor that is not functionally degraded among sensors existing in the parking lot area. As a result, it is easy to more accurately and safely guide the vehicle to a parking target position.

The acquisition unit of the parking control device according to the embodiment according to this disclosure may acquire, for example, as the operation state information, operation state information of an in-vehicle sensor provided in the vehicle that has entered the parking lot area. According to this configuration, it is possible to generate the parking guidance information, for example, after taking into consideration of the operation state of the in-vehicle sensor of the vehicle existing in the parking lot area. For example, it is possible to generate and provide the parking guidance information to the vehicle based on the accurate peripheral circumstance that may be detected (confirmed) by a normal in-vehicle sensor that is not functionally degraded among in-vehicle sensors. As a result, it is easy to more accurately and safely execute the guidance of the vehicle.
The acquisition unit of the parking control device according to the embodiment of this disclosure may acquire, for example, as the operation state information, operation state information of a fixed sensor provided in the parking lot area. According to this configuration, it is possible to generate the parking guidance information, for example, after taking into consideration of the operation state of the fixed sensor existing in the parking lot area. For example, it is possible to generate and provide the parking guidance information to the vehicle, for example, based on the more accurate circumstance in the parking lot area that may be detected (confirmed) by a normal fixed sensor that is not functionally degraded among fixed sensors in the parking lot area. As a result, it is easy to more accurately and safely execute the guidance of the vehicle.

The information generation unit of the parking control device according to the embodiment of this disclosure may generate, for example, traveling instruction information that causes a driver of the vehicle to perform a traveling operation and provide the traveling instruction information to the vehicle when the operation state information acquired from the vehicle is information indicating functional degradation of the in-vehicle sensor. According to this configuration, in a case where functional degradation is recognized in a predetermined sensor mounted in the vehicle, for example, an imaging unit that acquires a rearward image, it is difficult to safely move the vehicle backward by automatic traveling. In such a case, the traveling instruction information that causes the driver of the vehicle to perform a traveling operation is provided to the vehicle, so that safety confirmation is left to the driver. As a result, it is possible to realize safe and smooth traveling.

A vehicle control device according to an embodiment of this disclosure includes, for example, a detection unit configured to detect operation state information of an in-vehicle sensor mounted in a vehicle, a transmission unit configured to transmit the operation state information to a parking control device that is provided outside the vehicle and generates parking guidance information in a parking lot area, and a reception unit configured to receive the parking guidance information returned from the parking control device. According to this configuration, since it is possible to provide the operation state information of the in-vehicle sensor to the parking control device outside the vehicle and acquire the parking guidance information generated after taking into consideration of the operation state information, for example, it is easy to accurately and safely execute the guidance of the vehicle.

The vehicle control device according to the embodiment of this disclosure may further include, for example, a traveling control unit configured to control a traveling state of the vehicle, and the traveling control unit may cause the vehicle to automatically travel based on the parking guidance information acquired from the parking control device. According to this configuration, the vehicle may efficiently and safely execute automatic driving in the parking lot area.

The transmission unit of the vehicle control device according to the embodiment of this disclosure may transmit, for example, the operation state information based on a request signal transmitted from the parking control device. According to this configuration, since the transmission unit may transmit the operation state information of the in-vehicle sensor when a request is made from the parking control device, for example, the transmission unit may contribute to a reduction in the communication cost with the outside of the vehicle.

The transmission unit of the vehicle control device according to the embodiment of this disclosure may transmit the operation state information when entered a transmission and reception area of the parking control device. According to this configuration, since the transmission unit may transmit the operation confirmation of the in-vehicle sensor when entered the transmission and reception area of the parking control device, for example, the transmission unit may contribute to a reduction in the communication cost with the outside of the vehicle.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating an example of vehicle guidance which is an automatic valet parking system illustrated as an example of a parking lot to which a parking control device according to an embodiment may be applied;
Fig. 2 is an exemplary and schematic block diagram illustrating a hardware configuration of the parking control device according to the embodiment;
Fig. 3 is an exemplary and schematic block diagram illustrating a configuration of a vehicle control system including a vehicle control device in a vehicle that may be guided by the parking control device according to the embodiment;
Fig. 4 is an exemplary and schematic block diagram illustrating functions of a control system constructed by the parking control device according to the embodiment and the vehicle control device of the vehicle that may be guided by the parking control device;
Fig. 5 is a schematic view explaining an example in which the vehicle that may be guided by the parking control device according to the embodiment estimates the position of the own vehicle with a sensor that functions normally;
Fig. 6 is a bird's eye view of a parking lot area illustrated as an example of the parking lot to which the parking control device according to the embodiment may be applied, and is a schematic view explaining the generation of parking guidance information (traveling prohibition area information) when functional degradation of a fixed sensor in the parking lot area is confirmed; and
Fig. 7 is an exemplary and schematic sequence diagram illustrating the flow of a processing executed by the parking control device and the vehicle control device when automatic parking is executed in a control system constructed by the parking control device according to the embodiment and the vehicle control device of the vehicle that may be guided by the parking control device.

### DETAILED DESCRIPTION

Hereinafter, an exemplary embodiment disclosed here will be described. A configuration of the embodiment illustrated below and actions, results, and effects caused by the configuration are given by way of example. This disclosure may be realized by a configuration other than the configuration disclosed in the following embodiment, and at least one of various effects based on the basic configuration or derivative effects may be obtained.

A parking control device according to the present embodiment acquires operation state information indicating the operation state (normality or abnormality such as, for example, the presence or absence of an operation or the accuracy of detection) of a sensor existing in a parking lot area, and generates parking guidance information based on the operation state information. Then, for example, a vehicle may smoothly perform a parking operation using the generated parking guidance information.

In the following description, an automatic valet parking system is illustrated as an example of a parking lot to which the parking control device according to the present embodiment may be applied, and control realized by cooperation of the parking control device in an automatic valet parking lot and a vehicle control device corresponding to the parking control device will be described.

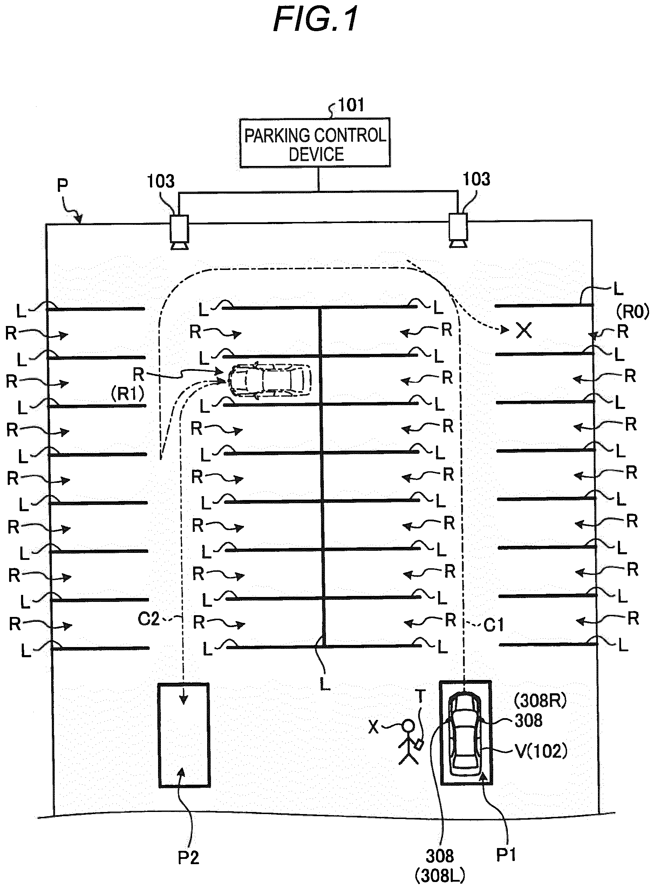

First, Fig. 1 is an exemplary and schematic diagram illustrating an example of automatic parking in an automatic valet parking system including a parking control device 101 according to an embodiment. Here, the automatic valet parking system is a system for realizing automatic valet parking including automatic parking and automatic delivery to be described later in a parking lot P having one or more parking regions R (parking divisions) partitioned by predetermined lane markings L such as, for example, white lines arranged on a road surface.

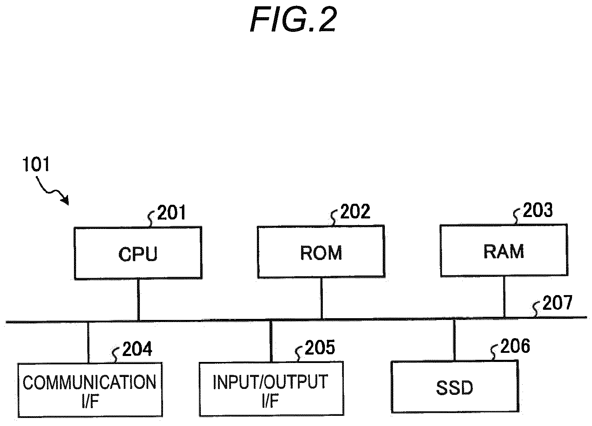

As illustrated in Fig. 1, in automatic valet parking, after an occupant X gets off from a vehicle V in a predetermined getting-off region P1 in the parking lot P, automatic parking (see a guidance path C1 indicated by the one-dot dash line arrow in Fig. 1) in which the vehicle V automatically moves (travels) from the getting-off region P1 to an vacant parking region R (parking region R1) in response to a predetermined instruction is executed. In addition, after the automatic parking is completed, automatic delivery (see a guidance path C2 indicated by the two-dot dash line arrow in Fig. 2) in which the vehicle V departs from the parking region R (parking region R1) and automatically moves and stops at a predetermined getting-on region P2 in response to a predetermined call is executed. The predetermined instruction and the predetermined call are realized, for example, by an operation of a terminal device T by the occupant X.

In addition, as illustrated in Fig. 1, the automatic valet parking system is realized by cooperation of the parking control device 101 provided in the parking lot P with a vehicle control device 102 mounted in the vehicle V. The parking control device 101 and the vehicle control device 102 are configured to be able to communicate with each other by wireless communication.

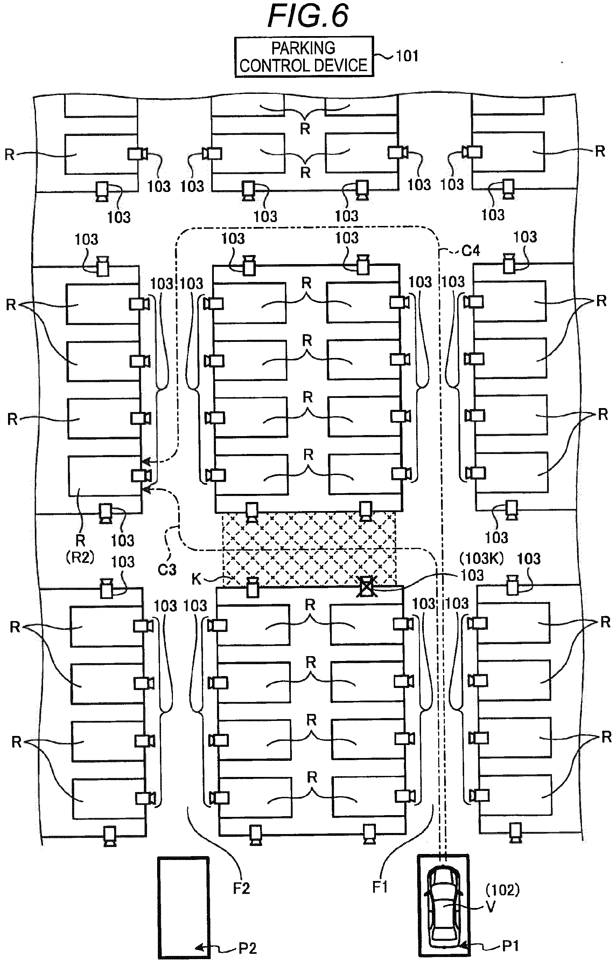

Here, the parking control device 101 monitors the circumstance in the parking lot P by receiving captured image data obtained from one or more monitoring cameras 103 that capture images of the circumstance in the parking lot P or data output from, for example, various sensors (not illustrated) provided in the parking lot P. Then, the parking control device 101 is configured to manage a plurality of parking regions R based on the monitoring result. Fig. 1 illustrates an example in which two monitoring cameras 103 are provided on, for example, the wall surface of the parking lot P. In another example, a plurality of monitoring cameras 103 may be arranged on, for example, a pillar or a ceiling surface in the vicinity of the parking region R so as to accurately monitor the use circumstance of one or more parking regions R or the circumstance of a traveling road, and the accuracy of monitoring of the monitoring cameras 103 may be improved (see Fig. 6). In addition, in addition to the monitoring cameras 103, for example, an infrared sensor or an ultrasonic sensor may be provided in the vicinity of the parking region R, and similarly, may be configured to manage the use circumstance of the parking region R.

In the embodiment, for example, the number or the arrangement of the getting-off region P1, the getting-on region P2, and the parking region R in the parking lot P is not limited to the example illustrated in Fig. 1. The technology of the embodiment may be applied to parking lots of various configurations different from the parking lot P illustrated in Fig. 1.

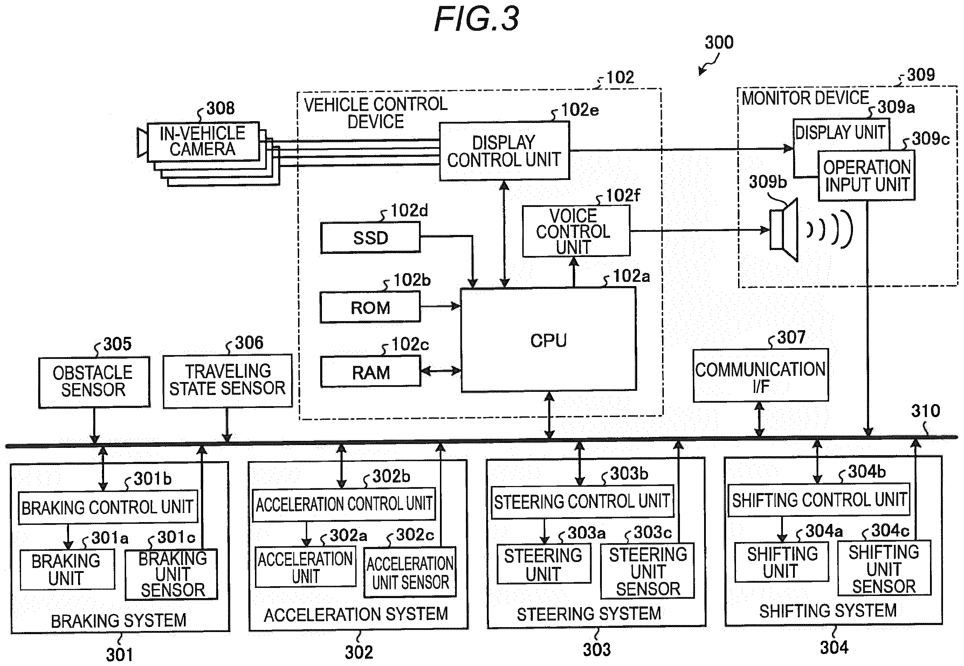

Next, a configuration of a vehicle control system 300 including the parking control device 101 according to the embodiment and the vehicle control device 102 will be described with reference to Fig. 2 and Fig. 3. The configuration illustrated in Fig. 2 and Fig. 3 are merely given by way of example, and the configurations of the parking control device 101 according to the embodiment and the vehicle control system 300 (the vehicle control device 102) may be set (changed) in various ways.

First, a hardware configuration of the parking control device 101 according to the embodiment will be described with reference to Fig. 2.

Fig. 2 is an exemplary and schematic block diagram illustrating a hardware configuration of the parking control device 101 according to the embodiment. As illustrated in Fig. 2, the parking control device 101 according to the embodiment has the same computer resources as a general information processing device such as, for example, a personal computer (PC).

In an example illustrated in Fig. 2, the parking control device 101 includes a central processing unit (CPU) 201, a read only memory (ROM) 202, a random access memory (RAM) 203, a communication interface (communication I/F or communication unit) 204, an input/output interface (input/output I/F) 205, and an solid state drive (SSD) 206. These hardware are connected to each other via a data bus 207.

The CPU 201 is a hardware processor that generally controls the parking control device 101. The CPU 201 reads out various control programs (computer programs) stored in the ROM 202, for example, and realizes modules of various functions according to instructions defined in the various control programs. For example, the CPU 201 realizes a module such as, for example, an acquisition unit that acquires operation state information of a sensor existing in the area of the parking lot P or an information generation unit that generates parking guidance information in the area of the parking lot P based on the operation state information.

The ROM 202 is a nonvolatile main storage device that stores, for example, parameters necessary for executing the above-described various control programs. The ROM 202 may also function as a parking lot data holding unit that holds parking lot data such as, for example, the layout of the parking lot P or the arrangement of various sensors (fixed sensors such as, for example, the monitoring cameras 103), for example, to be described later.

The RAM 203 is a volatile main storage device that provides a work area of the CPU 201.

The communication interface 204 is an interface that realizes communication between the parking control device 101 and an external device. For example, the communication interface 204 realizes transmission and reception of signals by wireless communication between the parking control device 101 and the vehicle V (vehicle control device 102).

The input/output interface 205 is an interface that realizes connection between the parking control device 101 and an external device. As the external device, for example, an input/output device used by an operator of the parking control device 101 may be considered.

The SSD 206 is a rewritable nonvolatile auxiliary storage device. In the parking control device 101 according to the embodiment, a hard disk drive (HDD) may be provided as an auxiliary storage device, in place of the SSD 206 (or in addition to the SSD 206).

Next, a system configuration of the vehicle control system 300 including the vehicle control device 102 according to the embodiment will be described with reference to Fig. 3.

Fig. 3 is an exemplary and schematic block diagram illustrating a system configuration of the vehicle control system 300 including the vehicle control device 102. As illustrated in Fig. 3, the vehicle control system 300 includes a braking system 301, an acceleration system 302, a steering system 303, a shifting system 304, an obstacle sensor 305 as an example of an in-vehicle sensor, a traveling state sensor 306, a communication interface 307 (communication I/F), an in-vehicle camera 308 as another example of an in-vehicle sensor, a monitor device 309, an in-vehicle network 310, and the vehicle control device 102.

The braking system 301 controls deceleration of the vehicle V. The braking system 301 includes a braking unit 301a, a braking control unit 301b, and a braking unit sensor 301c.

The braking unit 301a is a device for decelerating the vehicle V including, for example, a brake pedal. The braking control unit 301b is, for example, an electronic control unit (ECU) configured by a computer having a hardware processor such as, for example, a CPU. The braking control unit 301b controls the degree of deceleration of the vehicle V by driving an actuator (not illustrated) to actuate the braking unit 301a based on an instruction from the vehicle control device 102. The braking unit sensor 301c is a device for detecting the state of the braking unit 301a. For example, when the braking unit 301a includes a brake pedal, the braking unit sensor 301c detects the position of the brake pedal or the pressure acting on the brake pedal as the state of the braking unit 301a. The braking unit sensor 301c outputs the detected state of the braking unit 301a to the in-vehicle network 310.

The acceleration system 302 controls the acceleration of the vehicle V. The acceleration system 302 includes an acceleration unit 302a, an acceleration control unit 302b, and an acceleration unit sensor 302c.

The acceleration unit 302a is a device for accelerating the vehicle V including, for example, an accelerator pedal. The acceleration control unit 302b is, for example, an ECU constituted by a computer having a hardware processor such as, for example, a CPU. The acceleration control unit 302b controls the degree of acceleration of the vehicle V by driving an actuator (not illustrated) to actuate the acceleration unit 302a based on an instruction from the vehicle control device 102. The acceleration unit sensor 302c is a device for detecting the state of the acceleration unit 302a. For example, when the acceleration unit 302a includes an accelerator pedal, the acceleration unit sensor 302c detects the position of the accelerator pedal or the pressure acting on the accelerator pedal. The acceleration unit sensor 302c outputs the detected state of the acceleration unit 302a to the in-vehicle network 310.

The steering system 303 controls the heading direction of the vehicle V. The steering system 303 includes a steering unit 303a, a steering control unit 303b, and a steering unit sensor 303c.

The steering unit 303a is a device that turns a steerable wheel of the vehicle V including, for example, a steering wheel or a handle. The steering control unit 303b is, for example, an ECU constituted by a computer having a hardware processor such as, for example, a CPU. The steering control unit 303b controls the heading direction of the vehicle V by driving an actuator (not illustrated) to actuate the steering unit 303a based on an instruction from the vehicle control device 102. The steering unit sensor 303c is a device for detecting the state of the steering unit 303a. For example, when the steering unit 303a includes a steering wheel, the steering unit sensor 303c detects the position of the steering wheel or the rotation angle of the steering wheel. When the steering unit 303a includes a handle, the steering unit sensor 303c may detect the position of the handle or the pressure acting on the handle. The steering unit sensor 303c outputs the detected state of the steering unit 303a to the in-vehicle network 310.

The shifting system 304 controls the gear ratio of the vehicle V. The shifting system 304 includes a shifting unit 304a, a shifting control unit 304b, and a shifting unit sensor 304c.

The shifting unit 304a is a device for changing the gear ratio of the vehicle V including, for example, a shift lever. The shifting control unit 304b is, for example, an ECU configured by a computer having a hardware processor such as, for example, a CPU. The shifting control unit 304b controls the gear ratio of the vehicle V by driving an actuator (not illustrated) to actuate the shifting unit 304a based on an instruction from the vehicle control device 102. The shifting unit sensor 304c is a device for detecting the state of the shifting unit 304a. For example, when the shifting unit 304a includes a shift lever, the shifting unit sensor 304c detects the position of the shift lever or the pressure acting on the shift lever. The shifting unit sensor 304c outputs the detected state of the shifting unit 304a to the in-vehicle network 310.

The obstacle sensor 305 is a device for detecting information on an obstacle that may exist around the vehicle V. The obstacle sensor 305 includes, for example, a distance measurement sensor such as, for example, a sonar that detects the distance to an obstacle. The obstacle sensor 305 outputs the detected information to the in-vehicle network 310.

The traveling state sensor 306 is a device for detecting the traveling state of the vehicle V. For example, the traveling state sensor 306 includes a wheel speed sensor that detects the wheel speed of the vehicle V, an acceleration sensor that detects acceleration in the longitudinal direction or the traverse direction of the vehicle V, or a gyroscope that detects the turning speed (angular velocity) of the vehicle V. The traveling state sensor 306 outputs the detected traveling state to the in-vehicle network 310.

The communication interface 307 is an interface that realizes communication between the vehicle control system 300 and an external device. For example, the communication interface 307 realizes transmission and reception of signals by wireless communication between the vehicle control system 300 and the parking control device 101 or transmission and reception of signals by wireless communication between the vehicle control system 300 and the terminal device T.

The in-vehicle camera 308 is a device for imaging the circumstance around the vehicle V. The in-vehicle camera 308 is, for example, a digital camera incorporating an imaging element such as, for example, a charge coupled device (CCD) or a CMOS image sensor (CIS). The in-vehicle camera 308 may output moving image data (captured image data) at a predetermined frame rate. Each in-vehicle camera 308 includes a wide angle lens or a fisheye lens, and is capable of photographing, for example, a range from 140° to 220° in the horizontal direction. In addition, for example, the optical axis of the in-vehicle camera 308 disposed on the outer peripheral portion of the vehicle V may be set obliquely downward. Thus, each in-vehicle camera 308 sequentially photographs the external peripheral circumstance of the vehicle V including a road surface on which the vehicle V may move, a mark (including, e.g., an arrow or a lane marking, a line indicating a parking space, or a lane separation line) attached to the road surface, or an object (e.g., a pedestrian or a vehicle as an obstacle), and outputs the photographed external peripheral circumstance as captured image data.

Among in-vehicle cameras 308, for example, the in-vehicle camera 308 which is provided on the substantially central end in the vehicle width direction at the front side of the vehicle V, i.e., the front side in the vehicle longitudinal direction, for example, a front bumper or a front grill is capable of imaging a front image including the front end (e.g., a front bumper) of the vehicle V. In addition, among the in-vehicle cameras 308, for example, the in-vehicle camera 308 which is provided on the substantially central end in the vehicle width direction at the rear side of the vehicle V, i.e., the rear side in the vehicle longitudinal direction, for example, the upper position of a rear bumper is capable of imaging a rear region including the rear end (e.g., a rear bumper) of the vehicle V. In addition, among the in-vehicle cameras 308, for example, the in-vehicle camera 308 which is provided on the right end of the vehicle V, for example, a right door mirror is capable of imagining a right side image including a region centered on the right side of the vehicle V (e.g., a region from the front right side to the rear right side). Among the in-vehicle cameras 308, for example, the in-vehicle camera 308 which is provided on the left end of the vehicle V, for example, a left door mirror is capable of imaging a left side image including a region centered on the left side of the vehicle V (e.g., a region from the front left side to the rear left side).

Each in-vehicle camera 308 outputs the obtained captured image data to the vehicle control device 102. The vehicle control device 102 executes a calculation processing or an image processing based on the captured image data obtained by each in-vehicle camera 308, thereby being capable of, for example, generating an image with a wider viewing angle or generating a virtual image (e.g., a bird's eye image (planar image), a lateral view image, or a front view image) of the vehicle V viewed from the upper side, the front side, or the lateral side. The generated image may be used for monitoring the circumstance around the vehicle V (including the detection of an obstacle). Thus, based on the captured image data obtained by the in-vehicle camera 308, it is possible to estimate the current position (own vehicle position) of the vehicle V, to recognize the lane marking L that defines the parking region R, or to determine the relative relationship or the relative distance between the own vehicle and the lane marking L, and it is also possible to improve the accuracy of guidance in automatic valet parking. As will be described later, when the function of the in-vehicle camera 308 is degraded, the parking control device 101 considers that estimation of the accurate own vehicle position of the vehicle V, recognition of the lane marking L, or recognition of the relative relationship or the relative distance between the own vehicle and the lane marking L is impossible. Then, the parking control device 101 selects a movement target position (parking region R) to which the vehicle may be guided using the in-vehicle camera 308 that is not functionally degraded to generate parking guidance information for guiding the vehicle V and provide the parking guidance information to the vehicle V.

The monitor device 309 is provided in a dashboard, for example, in the room of the vehicle V. The monitor device 309 includes a display unit 309a, a voice output unit 309b, and an operation input unit 309c.

The display unit 309a is a device for displaying an image in response to an instruction from the vehicle control device 102. The display unit 309a is configured by, for example, a liquid crystal display (LCD) or an organic electroluminescent (EL) display (OLED). The voice output unit 309b is a device for outputting voice in response to an instruction from the vehicle control device 102. The voice output unit 309b is configured by, for example, a speaker. The operation input unit 309c is a device for receiving an input from the occupant in the vehicle V. The operation input unit 309c is configured by, for example, a touch panel provided on a display screen of the display unit 309a or a physical operation switch. The operation input unit 309c outputs the received input to the in-vehicle network 310. The monitor device 309 may also be used as, for example, a navigation system or an audio system.

The vehicle control device 102 is a device for generally controlling the vehicle control system 300. The vehicle control device 102 is an ECU having computer resources such as, for example, a CPU 102a, a ROM 102b, and a RAM 102c. More specifically, the vehicle control device 102 includes, for example, the CPU 102a, the ROM 102b, the RAM 102c, an SSD 102d, a display control unit 102e, and a voice control unit 102f.

The CPU 102a is a hardware processor that generally controls the vehicle control device 102. The CPU 102a reads out various control programs (computer programs) stored in the ROM 102b, for example, and realizes modules of various functions according to instructions defined in the various control programs. For example, the CPU 102a realizes a module such as, for example, a detection unit that detects operation state information of the in-vehicle sensor (e.g., the in-vehicle camera 308) mounted in the vehicle V or a communication control unit (a transmission unit or a reception unit) that transmits the operation state information to the external parking control device 101 or receives parking guidance information from the parking control device 101.

The ROM 102b is a nonvolatile main storage device that stores, for example, parameters necessary for executing the above-described various control programs. The RAM 102c is a volatile main storage device that provides a work area of the CPU 102a. The SSD 102d is a rewritable nonvolatile auxiliary storage device. In the vehicle control device 102 according to the embodiment, as an auxiliary storage device, an HDD may be provided in place of the SSD 102d (or in addition to the SSD 102d).

The display control unit 102e mainly performs, for example, an image processing on captured image data obtained from the in-vehicle camera 308 or generation of image data to be output to the display unit 309a of the monitor device 309, among the various processings executed by the vehicle control device 102.

The voice control unit 102f mainly performs generation of voice data to be output to the voice output unit 309b of the monitor device 309, among various processings executed by the vehicle control device 102.

The in-vehicle network 310 connects the braking system 301, the acceleration system 302, the steering system 303, the shifting system 304, the obstacle sensor 305, the traveling state sensor 306, the communication interface 307, and the operation input unit 309c of the monitor device 309 to the vehicle control device 102 to enable communication therebetween.

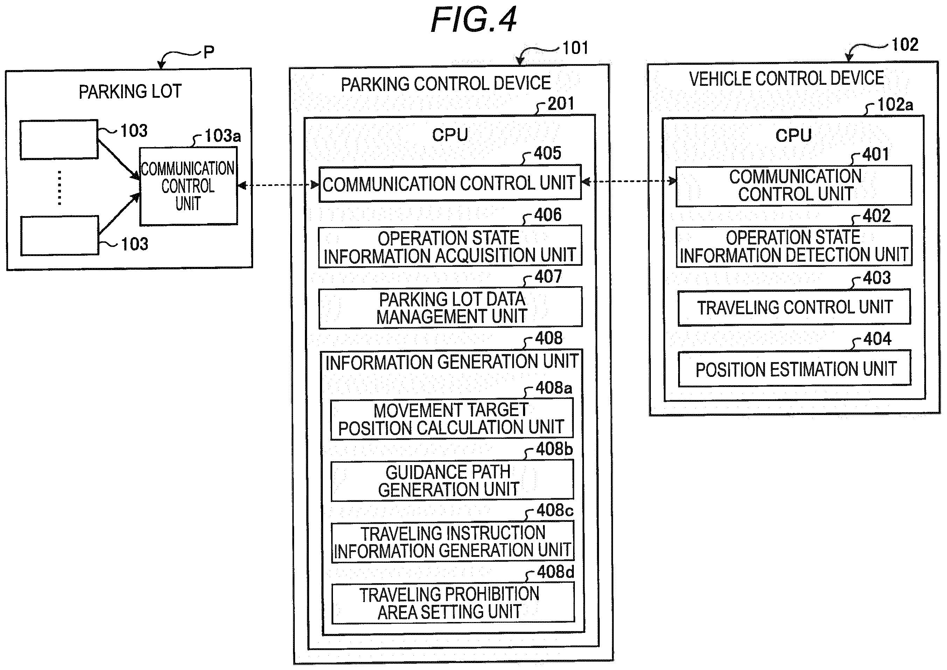

Fig. 4 is an exemplary and schematic block diagram illustrating functions of the parking control device 101 and the vehicle control device 102 according to the embodiment. The functions illustrated in Fig. 4 are realized by cooperation of software and hardware. That is, in an example illustrated in Fig. 4, the function of the parking control device 101 is realized as a result of the CPU 201 reading out and executing a predetermined control program stored in the ROM 202, for example, and the function of the vehicle control device 102 is realized as a result of the CPU 102a reading out and executing a predetermined control program stored in the ROM 102b or the like. In the embodiment, a part or the whole of the parking control device 101 and the vehicle control device 102 illustrated in Fig. 4 may be realized only by dedicated hardware (circuit).

As illustrated in Fig. 4, the CPU 102a of the vehicle control device 102 according to the embodiment includes modules such as, for example, a communication control unit 401, an operation state information detection unit 402, a traveling control unit 403, and a position estimation unit 404.

The communication control unit 401 includes a transmission unit and a reception unit, and controls wireless communication executed between the parking control device 101 and the terminal device T (see Fig. 1) held by the occupant X. For example, the communication control unit 401 authenticates the vehicle control device 102 with the parking control device 101 by transmitting and receiving predetermined data to and from the parking control device 101, or transmits a predetermined completion notification which is output to the parking control device 101 when automatic parking and automatic delivery are completed. In addition, the communication control unit 401 transmits operation state information detected by the operation state information detection unit 402 in response to a request from the parking control device 101, or receives parking guidance information generated by the parking control device 101.

The operation state information detection unit 402 detects operation state information of, for example, the in-vehicle sensor that may be used for periphery monitoring (e.g., the in-vehicle camera 308 or the obstacle sensor 305 (see Fig. 3)) among the in-vehicle sensors mounted in the vehicle V. The operation state information of the sensor is information indicating whether or not the sensor is performing a detection operation according to specifications or performance thereof. An example of a state where the sensor is not performing the detection operation according to specifications or performance thereof is a failure state where a part or the whole of a detection operation or the transmission of an output signal to the outside is not executed due to, for example, a failure, disconnection or contact failure of the sensor itself. Whether or not the sensor is in a failure state may be determined by the presence or absence of the loss of information in the output signal from the sensor or the presence or absence of the output signal itself. In addition, when the sensor has a self-diagnosis function, the failure state may be determined based on the self-diagnosis result.

In addition, another example of the state where the sensor is not performing the detection operation according to specifications or performance thereof is a dirty state where, for example, when a detection surface is dirty, an output signal may be detected, but the accuracy of detection corresponding to performance is not obtained. Whether or not the sensor is dirty may be determined using a well-known analysis technique. For example, in order to determine whether or not an imaging surface of the in-vehicle camera 308 mounted in the vehicle V is dirty, a known difference detection processing may be used. For example, a difference detection processing is performed for each of a plurality of captured image data (images) captured at a predetermined time interval in time series by the in-vehicle camera 308 of the traveling vehicle V to detect an immovable element on the image. For example, image content of the image captured by the in-vehicle camera 308 mounted in the vehicle V that is traveling changes every moment. However, when dirt such as, for example, splashes of mud is adhered to the imaging surface (e.g., a lens), the dirty portion stops at the same position on the captured image data (image) obtained in time series. On the other hand, the display content of a portion with no dirt changes every moment. Thus, a portion where the display content does not change (a portion excluding a vehicle body portion appearing in the image) may be specified as a dirty portion by taking the difference between at least two images captured at a predetermined time interval (e.g., 1 second).

In addition, as another dirt detection technique, for example, detection using a known spatial frequency is known. A fast Fourier transform (FFT) processing is performed for each image captured by the in-vehicle camera 308 to reconstruct display in a frequency domain. In this case, since light blurs when the imaging surface (e.g., a lens) of the in-vehicle camera 308 is dirty, the edge of an object appearing in the image blurs. That is, a high frequency domain portion attenuates (disappears). When such a phenomenon occurs, it may be determined that dirt is present on the imaging surface. In this case, it is possible to detect dirt with one image captured by the in-vehicle camera 308, and it is also possible to detect dirt even when the vehicle V is at standstill or even when an image captured at an extremely low speed is used. The dirt detection is not limited to these techniques, and well-known techniques may be used.

The operation state information detection unit 402 provides the operation state information to the parking control device 101 via the communication control unit 401. The communication control unit 401 may transmit the operation state information detected by the operation state information detection unit 402, for example, only when it receives a request signal transmitted from the parking control device 101. In this case, the vehicle V does not always transmit the information (operation state information) to the outside (e.g., the parking control device 101) but may execute a transmission processing only when necessary, which may contribute to a reduction in the communication cost of the vehicle V. In addition, in yet another example, for example, when the vehicle V (the vehicle control device 102) enters the transmission/reception area of the parking control device 101, and, for example, when an authentication processing is established between the parking control device 101 and the vehicle V, the communication control unit 401 may transmit the operation state information detected by the operation state information detection unit 402. In this case, the vehicle V also does not always transmit the information (operation state information) to the outside (e.g., the parking control device 101) but may execute a transmission processing only when necessary, which may contribute to a reduction in the communication cost of the vehicle V.

The operation state information detection unit 402 may similarly detect the operation state information including dirt detection for an in-vehicle sensor other than the in-vehicle camera 308, for example, the obstacle sensor 305 such as, for example, an infrared sensor or an ultrasonic sensor, and may provide the operation state information to the parking control device 101.

The travelling control unit 403 controls the traveling state of the vehicle V by controlling the braking system 301, the acceleration system 302, the steering system 303, or the shifting system 304, for example, thereby executing start control from the getting-off region P1 in the parking lot P or automatic traveling control (including automatic parking control) from the getting-off region P1 to the parking region R. The travelling control unit 403 moves the vehicle V from the current position to the movement target position according to a guidance path generated by the parking control device 101 to be described later. Similarly, the traveling control unit 403 executes automatic traveling control (including automatic delivery control) from the parking region R to the getting-on area P2 in the parking lot P. In a specific example to be described later, a schematic guidance path is transmitted from the parking control device 101. Then, the example illustrates a case where the vehicle V generates a more accurate guidance path (traveling path) with reference to the received schematic guidance path and where the travelling control unit 403 guides the vehicle V according to the more accurate guidance path.

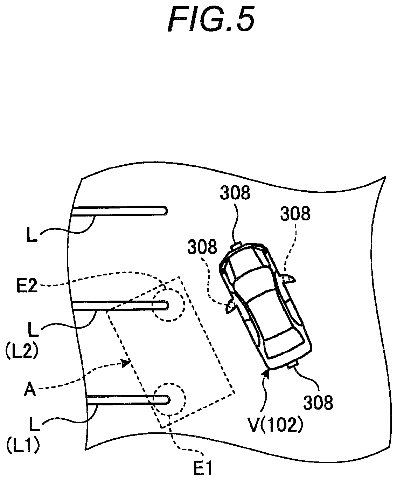

The position estimation unit 404 may estimate the current position of the vehicle V by a method (so-called odometry) of estimating the current position of the vehicle V using a detection value of, for example, a wheel speed sensor during the automatic traveling of the vehicle V in automatic parking and automatic delivery. However, in a case of odometry, since the error of the estimation result accumulates and becomes larger as the movement distance of the vehicle V becomes longer, an error occurs in the current position of the vehicle V. Thus, the position estimation unit 404 corrects the estimation result due to odometry so as to cancel the accumulated error. As illustrated in Fig. 5, the imaging range of the in-vehicle camera 308 provided on, for example, the left portion (e.g., a side mirror) of the vehicle V corresponds to a region A including the end E1 of the lane marking L (L1) and the end E2 of the lane marking L (L2). Thus, in an example illustrated in Fig. 5, when an image recognition processing such as, for example, a white line detection processing is performed on one laterally captured image data obtained by the in-vehicle camera 308 provided on the left side portion of the vehicle V, it is possible to detect data about the positions of the ends E1 and E2 of the lane markings L1 and L2. Then, by using the detected data, it is possible to calculate the relative position of the lane marking L1 (more specifically, the relative position of the end E1 of the lane marking L1) and the relative position of the lane marking L2 (more specifically, the relative position of the end E2 of the lane marking L2) with respect to the vehicle V. Then, by using the calculated relative positions and the estimation result based on odometry, it is possible to specify the calculated absolute positions of the ends E1 and E2 of the lane markings L1 and L2.

The position estimation unit 404 compares the calculative absolute positions of the ends E1 and E2 of the lane markings L1 and L2 specified based on the calculated relative positions with the regular absolute positions of the ends E1 and E2 of the lane markings L1 and L2 specified, for example, based on map data (lane marking data) provided from the parking control device 101. As a result, it is possible to more accurately estimate the current position of the vehicle V by correcting deviation of the estimation result of the position and direction (orientation) of the vehicle V due to odometry. The position estimation unit 404 provides the estimated current position of the vehicle V (e.g., data on the center position in the vehicle width direction of the line interconnecting the left and right rear wheels of the vehicle V) to the travelling control unit 403, and simultaneously provides the estimated current position of the vehicle V to the parking control device 101 via the communication control unit 401.

Meanwhile, as illustrated in Fig. 4, the CPU 201 of the parking control device 101 according to the embodiment includes a communication control unit 405, an operation state information acquisition unit 406, a parking lot data management unit 407, and an information generation unit 408 as functional components.

The communication control unit 405 includes a transmission unit and a reception unit, and controls wireless communication executed between the communication control unit 401 of the vehicle control device 102 and the communication control unit 103a of the fixed sensor (e.g., the monitoring camera 103) of the parking lot P. For example, the communication control unit 405 authenticates the vehicle control device 102 (vehicle V) by transmitting and receiving predetermined data to and from the vehicle control device 102, or receives a predetermined completion notification which is output from the vehicle control device 102 when automatic parking and automatic delivery are completed. In addition, the communication control unit 405 transmits a request signal of operation state information of each sensor necessary for generating parking guidance information of the parking lot P to be described later, receives the acquired operation state information, or transmits the generated parking guidance information to the vehicle control device 102 or the like. For example, when authentication is established with the communication control unit 401 of the vehicle control device 102, the communication control unit 405 may transmit a request signal of operation state information. In this case, when the vehicle V does not exist, it is possible to avoid continuous transmission of the request signal, which may contribute to a reduction in communication cost.

The operation state information acquisition unit 406 acquires operation state information of various sensors existing in the parking lot P (within the parking lot area) via the communication control unit 405. The various sensors existing in the parking lot P are in-vehicle sensors mounted in the vehicle V which may be used for periphery monitoring, for example, when the vehicle V that is starting (e.g., an ignition switch of which is turned on) is present in the parking lot P. The in-vehicle sensor in this case is, for example, the in-vehicle camera 308 or the obstacle sensor 305 (see Fig. 3). In this case, for example, it is possible to generate parking guidance information for guiding the vehicle V after taking into consideration of the operation state of the in-vehicle sensor of the vehicle V existing in the parking lot P. For example, the parking guidance information may be generated and provided to the vehicle V based on the accurate peripheral circumstance that may be detected (confirmed) by a normal in-vehicle sensor that is not functionally degraded among the in-vehicle sensors. As a result, it is easy to more accurately and safely execute the guidance of the vehicle V.

In addition, another example of the various sensors existing in the parking lot P is a fixed sensor that may be used, for example, for monitoring the use circumstance of the parking lot P and that may be provided on a pillar, a wall, a ceiling of the parking lot P, or the like. The fixed sensor in this case is, for example, the monitoring camera 103 (see Fig. 1), an infrared sensor, or an ultrasonic sensor. In this case, for example, it is possible to generate parking guidance information for guiding the vehicle V after taking into consideration of the operation state of the fixed sensor existing in the parking lot P. For example, the parking guidance information may be generated and provided to the vehicle V based on the more accurate circumstance in the parking lot area that may be detected (confirmed) with a normal fixed sensor that is not functionally degraded among the fixed sensors in the parking lot P. As a result, it is easy to more accurately and safely execute the guidance of the vehicle V.

The operation state information acquisition unit 406 may receive the operation state information detected by a transmission source, for example, the vehicle V side or the monitoring camera 103 side via the communication control unit 405. In addition, in another embodiment, the operation state information acquisition unit 406 may acquire sensor information (e.g., captured image data or ultrasonic data) transmitted from the vehicle V side or the monitoring camera 103 side via the communication control unit 405 and determine the operation state, thereby acquiring the operation state information.

The parking lot data management unit 407 manages data (information) on the parking lot P. For example, the parking lot data management unit 407 manages, for example, map data of the parking lot P held by the ROM 202 or the vacant space circumstance (parking circumstance data) of the parking region R that changes according to the entrance and exit of the vehicle V.

The information generation unit 408 generates parking guidance information for guiding the vacant parking space in the parking lot P to the vehicle V based on the operation state information acquired by the operation state information acquisition unit 406. The information generation unit 408 includes, for example, a movement target position calculation unit 408a, a guidance path generation unit 408b, a traveling instruction information generation unit 408c, and a traveling prohibition area setting unit 408d.

The movement target position calculation unit 408a calculates the movement target position to which the vehicle V as a parking target is guided based on the operation state information of the in-vehicle sensor (e.g., the in-vehicle camera 308) of the vehicle V acquired by the operation state information acquisition unit 406 or the operation state information acquired from the fixed sensor (e.g., the monitoring camera 103) in the parking lot P and based on the spatial circumstance of the parking region R managed by the parking lot data management unit 407. The movement target position may be set on the coordinates that are set on the basis of a reference position set in the parking lot P (e.g., the center position of the getting-off region P1). Then, when the vehicle V is parked in the parking region R with the posture securing an adequate space at the front, rear, right, and left sides, for example, the movement target position may be a position corresponding to the center position in the vehicle width direction of the line interconnecting the left and right rear wheels of the vehicle V.

For example, in Fig. 1, it is assumed that the vehicle V has entered the getting-off region P1 for automatic valet parking. In this case, based on the management information of the parking lot data management unit 407, the parking region R (parking region R0) in front of the getting-off region P1 is a vacant parking space closest to the getting-off region P1. Meanwhile, it is assumed that the in-vehicle camera 308 (308R) that captures a right side image of the vehicle V is functionally degraded (e.g., a state where the right side image may not be sufficiently captured due to dirt) from the operation state information of the vehicle V acquired by the operation state information acquisition unit 406. In this case, even if the movement target position calculation unit 408a sets the movement target position to the parking region R (parking region R0) closest to the getting-off region P1, since the position estimation unit 404 of the vehicle V may fail to detect the accurate position of the own vehicle relative to the parking region R (the parking region R0), the movement target position calculation unit 408a determines that accurate travelling control by the travelling control unit 403 may not be performed. Thus, the movement target position calculation unit 408a searches for, with reference to the management information of the parking lot data management unit 407, a vacant parking space to which the vehicle V may be guided using only the in-vehicle sensor that is functioning normally based on the operation state information of the vehicle V acquired by the operation state information acquisition unit 406. Fig. 1 illustrates a case where, as a result of the search, the parking region R (parking region R1) on the getting-on region P2 side is determined as a vacant parking space to which the vehicle V may be guided using only the in-vehicle sensor that is functioning normally. In this case, the vehicle V may recognize the lane marking L at the left side of the vehicle V from the getting-off region P1 to the parking region R (parking region R2) using the normally functioning in-vehicle camera 308 (308L) that captures a left side image. That is, the position estimation unit 404 of the vehicle control device 102 may always recognize the accurate position of the own vehicle, and the vehicle control device 102 may perform accurate travelling control by the travelling control unit 403. In this case, the guidance path generated by the guidance path generation unit 408b may be a rough path (a path illustrating a route) or may be an accurate path.

When the movement target position is calculated by the movement target position calculation unit 408a, the guidance path generation unit 408b generates the guidance path C1 from the getting-off region P1 to the calculated movement target position (parking region R2) using a well-known calculation technique. The communication control unit 405 transmits the movement target position calculated by the movement target position calculation unit 408a and the guidance path C1 generated by the guidance path generation unit 408b to the communication control unit 401 of the vehicle control device 102. The travelling control unit 403 may execute the automatic travelling control of the vehicle V based on the movement target position and the guidance path C1 received by the communication control unit 401.

When the functional degradation of a predetermined in-vehicle sensor may be confirmed based on the operation state information acquired from the vehicle V which is acquired by the operation state information acquisition unit 406, the traveling instruction information generation unit 408c generates traveling instruction information that causes the driver of the vehicle V to perform a traveling operation and provides the traveling instruction information to the vehicle V. When it is confirmed based on the operation state information that the in-vehicle camera 308 that acquires, for example, a rearward image of the vehicle V is functionally degraded, it is difficult to accurately bring the vehicle V to the parking region R corresponding to the movement target position calculated by the movement target position calculation unit 408a by backward traveling. In this case, the position estimation unit 404 may not accurately detect the positions of the left and right lane markings L in the parking region R, and it is difficult to guide the vehicle V to the parking region R with the posture securing an adequate space at front, rear, left, and right sides. In addition, when another vehicle is parked in the adjacent parking region R, it may be difficult to detect the relative position with respect to another vehicle and it may not possible to secure an accurate gap with another vehicle. In such a case, it is possible to provide traveling instruction information that causes the driver of the vehicle V to perform a traveling operation to the vehicle, so that safety confirmation is left to the driver. As a result, it is possible to realize safe and smooth traveling. The predetermined in-vehicle sensor is not limited to the in-vehicle camera 308 that acquires a rearward image. For example, even when the plurality of in-vehicle cameras 308 are functionally degraded such as, for example, when the left and right in-vehicle cameras 308 that capture lateral images are functionally degraded, the traveling instruction information generation unit 408c also generates traveling instruction information to cause the driver of the vehicle V to perform a traveling operation. When the parking lot P is dedicated to automatic valet parking, the traveling instruction information generation unit 408c may facilitate parking of the vehicle in a general parking lot (a parking lot where the driver may park the vehicle by a driver's operation) using the traveling instruction information (provision of use prohibition information of an automatic valet parking lot).

The traveling prohibition area setting unit 408d sets a traveling prohibition area when the operation state information acquisition unit 406 may confirm based on the operation state information acquired from the fixed sensor provided in the parking lot P, for example, the monitoring camera 103 that the monitoring camera 103 is not functioning normally. The setting of the traveling prohibition area will be described with reference to Fig. 6.

Fig. 6 is a bird's-eye view of the parking lot P configured by the layout of the parking region R similar to Fig. 1. In a case of the parking lot P illustrated in Fig. 6, the monitoring camera 103 is provided for each parking region R. In a case of Fig. 6, the monitoring camera 103 monitors, for example, the state of the parking region R facing the installed position thereof and the state of a traveling road around the parking region R. In this example, it is assumed that the operation state information acquisition unit 406 has confirmed that all in-vehicle sensors of the vehicle V are functioning normally based on the operation state information acquired from the vehicle V. Then, it is assumed that the movement target position calculation unit 408a searches for the parking region R (parking region R2) on the left side of the drawing as a vacant parking space based on the management information of the parking lot data management unit 407. When each monitoring camera 103 is functioning normally, the guidance path generation unit 408b generates a guidance path C3 as a path that may most efficiently guide the vehicle from the getting-off region P1 to the parking region R2. However, it is recognized according to the operation state information of the monitoring camera 103 as the fixed sensor which is acquired by the operation state information acquisition unit 406 via the communication control unit 103a that a monitoring camera 103k related to the guidance path C3 is not functioning normally. In this case, since the state of the region monitored by the monitoring camera 103k may not be accurately confirmed, the traveling prohibition area setting unit 408d sets the region monitored by the monitoring camera 103k to a traveling prohibition area K. As a result, the guidance path generation unit 408b generates a guidance path C4 as a path that may most efficiently guide the vehicle from the getting-off region P1 to the parking region R2 without passing through the traveling prohibition area K. In this case, the parking control device 101 may guide the vehicle V using a path that may reliably grasp the state of the guidance path. As a result, it is possible to realize safe and smooth traveling of the vehicle V. When the traveling prohibition area K exists on the path, the guidance path generation unit 408b sets the guidance path to avoid that position of the traveling prohibition area K when guiding the vehicle V from the parking region R2 to the getting-on region P2. In addition, when, for example, an area F1 directly connected to the getting-off region P1 or an area F2 directly connected to the getting-on area P2 is set to the traveling prohibition area K, it is practically impossible to use the parking lot P. In this case, the information generation unit 408 of the parking control device 101 may output an alarm that may be confirmed by an administrator, and may request restoration of the defective fixed sensor at an early stage.

The traveling prohibition area setting unit 408d may cause, for example, a display device provided in the getting-off region P1, for example, to display, for example, guidance information in the parking lot P (e.g., information on the vacant parking region R or traveling prohibition area information) based on the information acquired from the fixed sensor (e.g., the monitoring camera 103) in the parking lot P. In this case, when the user (occupant X) gets off, it is easy to recognize which area the vehicle V (own vehicle) travels around and where the vehicle is parked, and it is easy to give a sense of security.

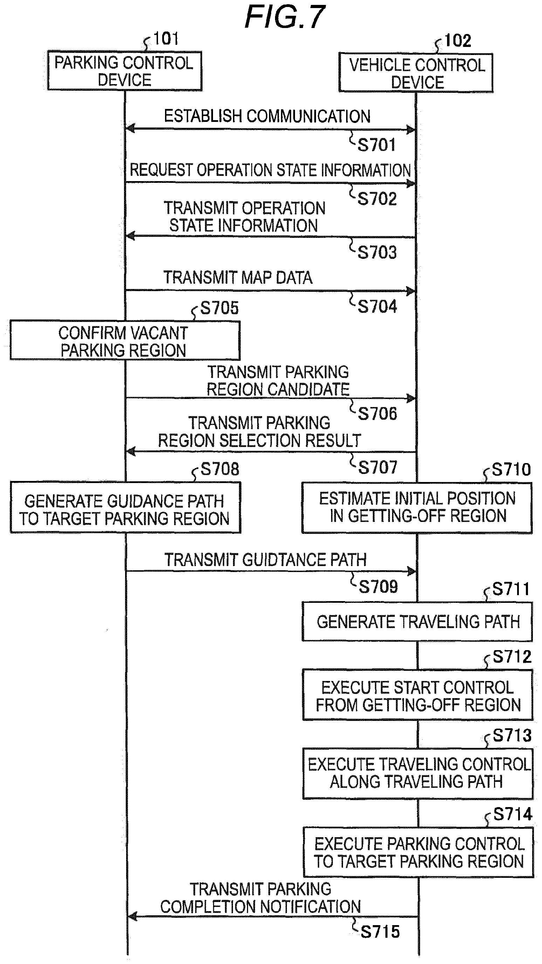

The flow of a processing executed by the parking control device 101 and the vehicle control device 102 configured as described above will be described with reference to an exemplary and schematic sequence diagram illustrated in Fig. 7. The processing sequence illustrated in Fig. 7 starts when the occupant X operates the terminal device T in the getting-off region P1 to give a predetermined instruction as a trigger for automatic parking.

In the processing sequence illustrated in Fig. 7, first, in S701, communication between the parking control device 101 and the vehicle control device 102 is established. In S701, for example, authentication by transmission and reception of identification information (ID) or assignment of operation authority for realizing automatic traveling under monitoring by the parking control device 101 is executed.

When the communication is established in S701, the communication control unit 405 of the parking control device 101 transmits a request signal that requests transmission of operation state information to the vehicle control device 102 in S702. In this case, the communication control unit 405 also transmits a request signal that requests the transmission of the operation state information to the fixed sensor (e.g., the monitoring camera 103) provided in the parking lot P. The communication control unit 103a of the monitoring camera 103 may provide the operation state information to the parking control device 101 all the time. The communication control unit 401 of the vehicle control device 102 returns the operation state information of the in-vehicle sensor (e.g., in-vehicle camera 308) of the vehicle V detected by the operation state information detection unit 402 in response to the request signal from the parking control device 101 in S703.

When acquiring the operation state information of the vehicle V, the communication control unit 405 of the parking control device 101 transmits map data of the parking lot P among the management information held by the parking lot data management unit 407 to the vehicle control device 102.

Then, in S705, the movement target position calculation unit 408a of the parking control device 101 confirms the vacant parking region R of the parking lot P with reference to the operation state information of the in-vehicle sensor acquired from the vehicle V, the operation state information of the fixed sensor in the parking lot P acquired from the communication control unit 103a, and the management information held by the parking lot data management unit 407. In this case, when there are a plurality of vacant parking regions R, the movement target position calculation unit 408a searches for a plurality of candidates of the vacant parking region R to which guidance may be performed smoothly using the in-vehicle sensor that is operating normally in the vehicle V. Thus, for example, as illustrated in Fig. 1, in the vehicle V, the parking region R0 that needs to be confirmed by the in-vehicle camera 308 that captures a right side image and is not operating normally is excluded from the candidates of the parking region R. Thus, the movement target position calculation unit 408a searches for, as one candidate, the parking region R1 that may be confirmed by a normally functioning in-vehicle sensor, although the parking region R1 is far from the getting-off area P1.

Then, in S706, the communication control unit 405 of the parking control device 101 transmits the candidates of the parking region R to the vehicle control device 102. The CPU 102a of the vehicle control device 102 causes the display unit 309a to display the layout of the parking lot P, the position of the vehicle V (own vehicle), and the position of the vacant parking region R as the parking candidate based on the map data of the parking lot P and the candidates of the parking region R which are transmitted earlier. The driver selects a desired vacant parking region R from the candidates displayed on the display unit 309a using the operation input unit 309c or the like. Then, in S707, the communication control unit 401 transmits the selection result of the parking region R to the parking control device 101.

The movement target position calculation unit 408a sets the parking region R designated in S707 to a parking target region, and calculates the movement target position. Then, in S708, the guidance path generation unit 408b generates a (rough) guidance path from the getting-off region P1 to the movement target position calculated by the movement target position calculation unit 408a. In this case, when the traveling prohibition area K as illustrated in Fig. 6 is set in the parking lot P, the guidance path generation unit 408b generates a guidance path that avoids the traveling prohibition area K.

Then, in S709, the parking control device 101 transmits the guidance path generated in S708 to the vehicle control device 102.

On the other hand, after transmitting the selection result of the desired parking region R in S707, the vehicle control device 102 estimates an initial position in the getting-off region P1 in S710. The initial position is the current position of the vehicle V within the getting-off region P1, which is the starting point from the getting-off region P1. For the estimation of the initial position, a method using captured image data obtained by the in-vehicle camera 308 may be used similarly to the above-described estimation of the current position. In the example illustrated in Fig. 7, the processing of S710 is executed before the processing of S709, but the processing of S710 may be executed after the processing of S709. Alternatively, the processing of S710 may be executed after receiving the map data from the parking control device 101 in S704.

When estimating the initial position in S710 and receiving the guidance path transmitted from the parking control device 101 in S709, the vehicle control device 102 generates a traveling path that needs to be visited upon actual automatic parking and is more accurate than the guidance path in S711 based on, for example, the initial position estimated in S710.

Then, in S712, the travelling control unit 403 of the vehicle control device 102 executes start control from the getting-off region P1.

Then, the travelling control unit 403 of the vehicle control device 102 executes, in S713, travelling control along the traveling path generated in S711. This traveling control is executed using estimation of the current position by a method using data of the in-vehicle sensor (e.g., the in-vehicle camera 308) that is functioning normally in the vehicle V. As a result, it is possible to accurately and safely guide the vehicle V to the movement target position set by the movement target position calculation unit 408a of the parking control device 101. Then, in S714, the travelling control unit 403 of the vehicle control device 102 executes parking control to the movement target position of the selected parking region R. In this case, the guidance position may be finely adjusted using the data of the in-vehicle sensor (e.g., the in-vehicle camera 308) that is functioning normally in the vehicle V, and the vehicle V may be parked in the parking region R with an adequate space at front, rear, left, and right sides.

Then, when the parking control in S714 is completed, the vehicle control device 102 transmits a parking completion notification to the parking control device 101 in S715. Upon receiving the parking completion notification, the parking control device 101 updates the management information of the parking lot data management unit 407 and prepares for next parking guidance.

As described above, automatic parking in automatic valet parking is realized. Although it is unlikely that the in-vehicle sensor is functionally degraded during parking, for example, in a case of an outdoor parking, the detection surface of the in-vehicle sensor may become dirty due to a change in weather or the like. Therefore, the same processing as that at the time of entrance is carried out at the time of exit, and control is executed to automatically travel the vehicle V from the parking region R in which the vehicle V has been parked to the getting-on region P2 while taking into consideration of the operation state information of the in-vehicle sensor.

In addition, in the processing of S705, when it may be confirmed based on the operation state information acquired from the vehicle V by the parking control device 101 that the predetermined in-vehicle sensor is not functioning normally, the traveling instruction information generation unit 408c generates traveling instruction information that causes the driver of the vehicle to perform a traveling operation. For example, when the in-vehicle camera 308 that captures a rearward image is functionally degraded, or when the left and right in-vehicle cameras 308 that capture left and right side images are functionally degraded, it is difficult to accurately detect the circumstance around the vehicle V. In this case, the traveling instruction information generation unit 408c generates traveling instruction information that prohibits automatic valet parking. Then, the operation state information acquisition unit 406 of the parking control device 101 provides traveling instruction information to the vehicle control device 102. In this case, when the parking lot P corresponds to both automatic valet parking and general parking, the movement target position calculation unit 408a may generate information on the position of the vacant parking region R (candidate for the parking region R) based on the management information of the parking lot data management unit 407, and may provide the information, together with the traveling instruction information, to the vehicle control device 102 in step S706. In addition, when the parking lot P does not correspond to general parking, the traveling instruction information generation unit 408c generates information that recommends parking in another parking lot as the traveling instruction information, and in S706, provides the information to the vehicle control device 102. When the traveling instruction information generation unit 408c generates the traveling instruction information, the processing from S707 onward is omitted, and a series of processing sequences is terminated.

As described above, according to the parking control device 101 and the vehicle control device 102 of the present embodiment, since the parking guidance information is generated on the parking control device 101 side after taking into consideration of the operation state information of the sensors existing in the parking lot P, it is possible to accurately and safely execute the guidance of the vehicle V and park the vehicle V in the parking region R.

The above example has described a case where the parking lot P is an automatic valet parking lot, but the configuration of the present embodiment may also be applied when parking assistance is performed for the vehicle V that has entered for parking in a general parking lot. For example, the configuration of the embodiment may also be applied to parking assistance in which a traveling operation of the vehicle V is fully or partially automatically performed in a state where the driver is in the vehicle V or parking assistance in which only operation guidance is provided to the vehicle V to cause the driver to operate the vehicle. In this case, the parking control device 101 generates parking guidance information based on the accurate peripheral circumstance that may be detected (confirmed) with a normal sensor that is not functionally degraded in consideration of the operation state information of the in-vehicle sensor of the vehicle V or the operation state information of the fixed sensor of the parking lot P. As a result, it is possible to execute accurately and safely the guidance of the vehicle V.

In addition, for example, when it is recognized that the reason of the functional degradation of the in-vehicle sensor is dirt on the detection surface, the parking control device 101 may provide cleaning information that urges the vehicle V to clean the dirt on the detection surface. For example, when the vehicle V is equipped with an automatic cleaning device of the sensor, the vehicle V may execute automatic cleaning according to the cleaning information from the parking control device 101. In addition, the vehicle V not equipped with the automatic cleaning device may present a message that prompts the cleaning of the detection surface to the driver. Then, after the cleaning, the parking control device 101 requests the operation state information of the in-vehicle sensor again and executes the above-described processing sequence. As a result, it is possible to reduce cases where parking is impossible due to dirt on the detection surface of the sensor.

In addition, the above-described example has illustrated a case where a rough guidance path is generated by the parking control device 101 and a more accurate guidance path (traveling path) is generated by the vehicle control device 102. In another embodiment, an accurate guidance path may be generated by the parking control device 101, and the travelling control unit 403 of the vehicle control device 102 may cause the vehicle V to travel according to the guidance path. In this case, it is possible to reduce the processing load of the vehicle control device 102. In addition, the above-described example has illustrated a case where the information generation unit 408 generates both the movement target position and the guidance path, but the information generation unit 408 may generate either one of them and the vehicle control device 102 may generate the other. In this case, decentralization of the processings becomes possible, which may contribute to a reduction in the load of each processing.

In addition, the above-described example has illustrated a case where a request signal that requests operation state information is transmitted from the parking control device 101 and the vehicle control device 102 responds to the request signal. In another embodiment, when the vehicle V (communication control unit 401) enters the transmittable/receivable area of the communication control unit 405 of the parking control device 101, the vehicle control device 102 may transmit the operation state information.

A program for the processings executed by the CPU 201 of the parking control device 101 and the CPU 102a of the vehicle control device 102 according to the present embodiment may be a file in an installable format or an executable format, and may be provided by being recorded in a computer readable recording medium such as, for example, a CD-ROM, a flexible disk (FD), a CD-R, or a digital versatile disk (DVD).

Moreover, the processing program of the present embodiment may be provided by being stored on a computer connected to a network such as the Internet and being downloaded via the network. In addition, the processing program executed in the present downloaded via the network. In addition, the processing program executed in the present embodiment may be provided or distributed via a network such as, for example, the Internet.

Although the embodiments and modifications disclosed here have been exemplified above, the above-described embodiments and modifications thereof are merely given by way of example, and are not intended to limit the scope of this disclosure. Such novel embodiments and modifications may be implemented in various other modes, and various omissions, substitutions, combinations, and changes thereof may be made without departing from this disclosure. In addition, the embodiments and modifications may be included in the scope of this disclosure and are included in the disclosure described in the claims and the equivalent scope thereof.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the present invention. Accordingly, it is expressly intended that all such variations, changes and equivalents which fall within the scope of the present invention as defined in the claims, be embraced thereby.

## Claims

1. A parking control device (101) comprising:
an acquisition unit (406) configured to acquire operation state information of a sensor (103) existing in a parking lot area (P); and
**characterized by** an information generation unit (408) configured to generate parking guidance information within the parking lot area which is based on the operation state information.

2. The parking control device according to claim 1, wherein
the information generation unit generates, as the parking guidance information, at least one of a movement target position for guiding a vehicle (V) that has entered the parking lot area to a vacant parking space in the parking lot area and a guidance path for guiding the vehicle to the movement target position.

3. The parking control device according to claim 1 or 2, wherein
the acquisition unit acquires, as the operation state information, operation state information of an in-vehicle sensor (305, 308) provided in the vehicle that has entered the parking lot area.

4. The parking control device according to any one of claims 1 to 3, wherein
the acquisition unit acquires, as the operation state information, operation state information of a fixed sensor (103) provided in the parking lot area.

5. The parking control device according to claim 3, wherein
the information generation unit generates parking guidance information that causes a driver of the vehicle to perform a traveling operation and provides the parking guidance information to the vehicle when the operation state information acquired from the vehicle is information indicating functional degradation of the in-vehicle sensor.

6. A vehicle control device (102) including a parking control device (101) according to any of claims 1 to 5, the vehicle control device (102) comprising:
a detection unit (402) configured to detect operation state information of an in-vehicle sensor mounted in a vehicle (V);
a transmission unit (401) configured to transmit the operation state information to the parking control device (101) that is provided outside the vehicle and generates parking guidance information within a parking lot area which is based on the operation state information; and
a reception unit (401) configured to receive the parking guidance information returned from the parking control device.

7. The vehicle control device according to claim 6, further comprising:
a traveling control unit (403) configured to control a traveling state of the vehicle,
wherein the traveling control unit causes the vehicle to automatically travel based on the parking guidance information acquired from the parking control device.

8. The vehicle control device according to claim 6 or 7, wherein
the transmission unit transmits the operation state information based on a request signal transmitted from the parking control device.

9. The vehicle control device according to claim 6 or 7, wherein
the transmission unit transmits the operation state information when entered a transmission and reception area of the parking control device.

## Patentansprüche

1. Parksteuervorrichtung (101), umfassend:
eine Erlangungseinheit (406), die dazu ausgestaltet ist, Betriebsstatusinformationen von einem Sensor (103), der in einem Parkplatzbereich (P) vorhanden ist, zu erlangen, und
**gekennzeichnet durch** eine Informationserzeugungseinheit (408), die dazu ausgestaltet ist, Parkleitinformationen innerhalb des Parkplatzbereichs, die auf den Betriebsstatusinformationen basieren, zu erzeugen.

2. Parksteuervorrichtung nach Anspruch 1, wobei
die Informationserzeugungseinheit als die Parkleitinformationen mindestens eines von einer Bewegungszielposition zum Leiten eines Fahrzeugs (V), das in den Parkplatzbereich eingefahren ist, zu einem freien Parkplatz in dem Parkplatzbereich und einem Leitweg zum Leiten des Fahrzeugs zu der Bewegungszielposition erzeugt.

3. Parksteuervorrichtung nach Anspruch 1 oder 2, wobei
die Erlangungseinheit als die Betriebszustandsinformationen Betriebszustandsinformationen eines Sensors (305, 308) im Fahrzeug, der in dem Fahrzeug, das in den Parkplatzbereich eingefahren ist, vorgesehen ist, erlangt.

4. Parksteuervorrichtung nach einem der Ansprüche 1 bis 3, wobei
die Erlangungseinheit als die Betriebszustandsinformationen Betriebszustandsinformationen eines festen Sensors (103), der in dem Parkplatzbereich vorgesehen ist, erlangt.

5. Parksteuervorrichtung nach Anspruch 3, wobei
die Informationserzeugungseinheit Parkleitinformationen erzeugt, die einen Fahrer des Fahrzeugs veranlassen, einen Fahrvorgang durchzuführen, und die Parkleitinformationen dem Fahrzeug bereitstellt, wenn die Betriebszustandsinformationen, die von dem Fahrzeug erlangt werden, Informationen sind, die eine funktionelle Verschlechterung des Sensors im Fahrzeug anzeigen.

6. Fahrzeugsteuervorrichtung (102), die eine Parksteuervorrichtung (101) nach einem der Ansprüche 1 bis 5 beinhaltet, wobei die Fahrzeugsteuervorrichtung (102) umfasst:
eine Detektionseinheit (402), die dazu ausgestaltet ist, Betriebszustandsinformationen eines Sensors im Fahrzeug, der in einem Fahrzeug (V) angebracht ist, zu detektieren,
eine Übertragungseinheit (401), die dazu ausgestaltet ist, die Betriebszustandsinformationen an die Parksteuervorrichtung (101), die außerhalb des Fahrzeugs vorgesehen ist und Parkleitinformationen innerhalb eines Parkplatzbereichs erzeugt, die auf den Betriebszustandsinformationen basieren, zu übertragen, und
eine Empfangseinheit (401), die dazu ausgestaltet ist, die Parkleitinformationen, die von der Parksteuervorrichtung zurückgesendet werden, zu empfangen.

7. Fahrzeugsteuervorrichtung nach Anspruch 6, ferner umfassend:
eine Fahrsteuereinheit (403), die dazu ausgestaltet ist, einen Fahrzustand des Fahrzeugs zu steuern,
wobei die Fahrsteuereinheit bewirkt, dass das Fahrzeug automatisch basierend auf den Parkleitinformationen, die von der Parksteuervorrichtung erfasst werden, fährt.

8. Fahrzeugsteuervorrichtung nach Anspruch 6 oder 7, wobei
die Übertragungseinheit die Betriebszustandsinformationen basierend auf einem Anforderungssignal, das von der Parksteuervorrichtung übertragen wird, überträgt.

9. Fahrzeugsteuervorrichtung nach Anspruch 6 oder 7, wobei
die Übertragungseinheit die Betriebszustandsinformationen bei Eintreten in einen Übertragungs- und Empfangsbereich der Parksteuervorrichtung überträgt.

## Revendications

1. Dispositif de commande de stationnement (101) comprenant :
une unité d'acquisition (406) configurée pour acquérir des informations d'état d'opération d'un capteur (103) se trouvant dans une zone de parc de stationnement (P) ; et
**caractérisé par** une unité de génération d'informations (408) configurée pour générer des informations de guidage de stationnement à l'intérieur de la zone de parc de stationnement qui sont basées sur les informations d'état d'opération.

2. Dispositif de commande de stationnement selon la revendication 1, dans lequel
l'unité de génération d'informations génère, comme informations de guidage de stationnement, au moins l'un parmi une position cible de déplacement pour guider un véhicule (V) qui a pénétré dans la zone de parc de stationnement vers un espace de stationnement vacant dans la zone de parc de stationnement, et un chemin de guidage pour guider le véhicule vers la position cible de déplacement.

3. Dispositif de commande de stationnement selon la revendication 1 ou 2, dans lequel
l'unité d'acquisition acquiert, comme informations d'état d'opération, des informations d'état d'opération d'un capteur embarqué (305, 308) prévu dans le véhicule qui a pénétré dans la zone de parc de stationnement.

4. Dispositif de commande de stationnement selon l'une quelconque des revendications 1 à 3, dans lequel
l'unité d'acquisition acquiert, comme informations d'état d'opération, des informations d'état d'opération d'un capteur fixe (103) prévu dans la zone de parc de stationnement.

5. Dispositif de commande de stationnement selon la revendication 3, dans lequel
l'unité de génération d'informations génère des informations de guidage de stationnement qui amènent un conducteur du véhicule à effectuer une opération de déplacement et fournit les informations de guidage de stationnement au véhicule lorsque les informations d'état d'opération acquises à partir du véhicule sont des informations indiquant une dégradation fonctionnelle du capteur embarqué.

6. Dispositif de commande de véhicule (102) comportant un dispositif de commande de stationnement (101) selon l'une quelconque des revendications 1 à 5, le dispositif de commande de véhicule (102) comprenant :
une unité de détection (402) configurée pour détecter des informations d'état d'opération d'un capteur embarqué monté dans un véhicule (V) ;
une unité de transmission (401) configurée pour transmettre les informations d'état d'opération au dispositif de commande de stationnement (101) qui est prévu à l'extérieur du véhicule et qui génère des informations de guidage de stationnement à l'intérieur d'une zone de parc de stationnement qui sont basées sur les informations d'état d'opération ; et
une unité de réception (401) configurée pour recevoir les informations de guidage de stationnement renvoyées par le dispositif de commande de stationnement.

7. Dispositif de commande de véhicule selon la revendication 6, comprenant en outre :
une unité de commande de déplacement (403) configurée pour commander un état de déplacement du véhicule,
dans lequel l'unité de commande de déplacement amène le véhicule à se déplacer automatiquement sur la base des informations de guidage de stationnement acquises à partir du dispositif de commande de stationnement.

8. Dispositif de commande de véhicule selon la revendication 6 ou 7, dans lequel
l'unité de transmission transmet les informations d'état d'opération sur la base d'un signal de demande transmis par le dispositif de commande de stationnement.

9. Dispositif de commande de véhicule selon la revendication 6 ou 7, dans lequel
l'unité de transmission transmet les informations d'état d'opération à la pénétration d'une zone de transmission et de réception du dispositif de commande de stationnement.
